Europäisches Patentamt

(19) European Patent Office

Office européen des brevets

(11) EP 0 836 318 A2

## (12) EUROPEAN PATENT APPLICATION

(43) Date of publication:
15.04.1998 Bulletin 1998/16

(51) Int. Cl.⁶: $H04N\ 3/15$

(21) Application number: 97117344.8

(22) Date of filing: 07.10.1997

(84) Designated Contracting States:
AT BE CH DE DK ES FI FR GB GR IE IT LI LU MC NL PT SE

(30) Priority: 08.10.1996 JP 267552/96

(71) Applicant:
SHARP KABUSHIKI KAISHA
Osaka-shi, Osaka-fu 545 (JP)

(72) Inventors:
• Harada, Toshiaki
Tenri-shi, Nara 632 (JP)
• Iwaki, Tetsuo
Yamatokoriyama-shi, Nara 639-11 (JP)
• Okuda, Tohru
Nara-shi, Nara 631 (JP)

(74) Representative:
Müller, Frithjof E., Dipl.-Ing.
Patentanwälte
MÜLLER & HOFFMANN,
Innere Wiener Strasse 17
81667 München (DE)

### (54) Image pickup apparatus having image shifting means

(57) An image-shifting means shifts photographing light from a subject by a predetermined amount relative to a charge coupled device on a two-dimensional basis. The charge coupled device outputs an electric signal corresponding to the quantity of received photographing light that has passed through the image-shifting means to an A/D converter. An image memory stores image data from the A/D converter. Further, a light-quantity correction section converts a predetermined pixel value (for example, a minimum value, the average value, a maximum value, etc.) of the image data after the shift that has been stored in the image memory into a predetermined pixel value of the image data before the shift, and corrects the difference between quantities of photographing light before and after the shift by making the two pixel values coincide with each other. This makes it possible to eliminate the difference between quantities of photographing light before and after the image shift, and consequently to prevent degradation in the image quality of a composite image due to the difference between quantities of photographing light before and after the image shift.

FIG. 1

Printed by Xerox (UK) Business Services
2.15.12/3.4

**Description**

FIELD OF THE INVENTION

The present invention relates to a photographing apparatus that is provided with a charge coupled device. In particular, the present invention concerns a photographing apparatus, such as a digital still camera, for obtaining images with high resolution by carrying out an image shift. Here, the image shift is designed to shift a subject image relative to the charge coupled device.

BACKGROUND OF THE INVENTION

Conventionally, various techniques have been proposed to obtain images with high resolution in photographing apparatuses that have charge coupled devices (CCDs). The image-shifting technique is one of these techniques. In the image-shifting technique, exposures are carried out before and after a variation of photographing light during one photographing operation, and two images that have obtained from the two exposures are combined. Without increasing the number of pixels of the charge coupled device, this technique makes it possible to obtain an image with high resolution in an equivalent manner to that in which an increased number of pixels are used.

For example, Japanese Laid-Open Patent Publication No. 70283/1992 (Tokukaihei 4-70283) shows one of the conventional methods for providing images with high resolution by using such an image-shifting technique. In this Patent Publication, after a first exposure has been carried out on a charge coupled device, a second exposure is carried out with the charge coupled device being shifted by a 1/2 pixel pitch. In other words, photographing light is relatively shifted by shifting the charge coupled device. Further, in this conventional method, the amount of exposure before the shift is controlled by an electronic shutter of the charge coupled device, while the amount of exposure after the shift is controlled by a mechanical shutter such as, for example, a lens shutter or a focal plane shutter. Thus, images, each corresponding to one frame, are obtained from the two exposures, and these images are combined so that a still image with high resolution is obtained. In other words, in the above-mentioned conventional method, images with high resolution are achieved by obtaining images signals that correspond to the number of pixels that is virtually twice as many as the original number thereof.

In the case when the above-mentioned image-shifting technique is used to obtain an image with high resolution, if there is a difference in quantity between the two photographing lights, the difference between quantities of the photographing light appears as distortion when a still image is obtained by composing the resulting two images. This results in degradation in the image quality of the composite image. Therefore, it is preferable to set the amount of exposure after the relative shift of photographing light equal to the amount of exposure before the shift.

For this reason, in the above-mentioned Japanese Laid-Open Patent Publication No. 70283/1992 (Tokukaihei 4-70283), the closed point of a shutter screen in the mechanical shutter is monitored. Then, after the shutter screen has been closed to the position at which the amount of exposure before the shift of photographing light becomes equal to the amount of exposure after the shift thereof, an exposure after the shift is started.

However, in the arrangement of the above-mentioned Patent Publication, errors tend to occur even if the shutter screen is controlled as described above because there are irregularities in the driving speed of the mechanical shutter. The resulting problem is that it is difficult to make the amounts of exposure before and after the shift exactly coincident with each other.

Further, even if the exposure time is controlled by using only the electronic shutter without using the mechanical shutter, the quantities of light of images obtained before and after the shift tend to change because of flickers (a phenomenon in which light turns on and off) that occur in the case of fluorescent lamps, etc.

SUMMARY OF THE INVENTION

The objective of the present invention is to provide a photographic apparatus which is capable of preventing degradation in the image quality of a composite image that is formed by a difference between quantities of photographing light before and after the image shift.

In order to achieve the above-mentioned objective, the photographing apparatus of the present invention is provided with: a charge coupled device, having a plurality of pixels, for photographing light from a subject; an image-shifting means for shifting the photographing light relative to the charge coupled device by a predetermined amount on a two-dimensional basis; and an image-data correction means for correcting image data before or after the shift so that image data corresponding to the photographing light before the shift made by the image-shifting means is coincident with image data corresponding to the photographing light after the shift made by the image-shifting means.

With the above-mentioned arrangement, photographing light from a subject is focused onto the charge coupled device after having been shifted by the image-shifting means relative to the charge coupled device by a predetermined amount on a two-dimensional basis.

At this time, the image-data correction means corrects image data before or after the shift so that image data corresponding to the photographing light before the shift made by the image-shifting means is coincident with image data corresponding to the photographing light after the shift made by the image-shifting means; therefore, the quantities of the photographing lights before and after the shift become equal to each other. Consequently, it becomes possible to eliminate the conventional disadvantage in which distortion appears on the composite image due to a difference in quantity of light between two images that have been photographed through the image shift. Therefore, the above-mentioned arrangement makes it possible to correct the difference between quantities of photographing light before and after the image shift, and also to prevent degradation in the image quality of the composite image due to the above-mentioned difference between quantities of light.

For a fuller understanding of the nature and advantages of the invention, reference should be made to the ensuing detailed description taken in conjunction with the accompanying drawings.

## BRIEF DESCRIPTION OF THE DRAWINGS

Fig. 1 is a block diagram that shows a structural example of a photographing apparatus in accordance with the present invention.

Fig. 2 is an explanatory drawing that shows positions of photographing cells in a charge coupled device in frame 1 and frame 2.

Fig. 3 is a timing chart that shows timing of various operations in the charge coupled device.

Fig. 4(a) is a perspective view that shows a schematic construction of a variable apex-angle prism; and Fig. 4(b) is a side view of the variable apex-angle prism.

Fig. 5(a) is a plan view that shows a state in which none of glass plates of the variable apex-angle prism rotate; and Fig. 5(b) is a plan view that shows a state in which one of the glass plates rotates by an angle of $\theta_1$.

Fig. 6(a) is an explanatory drawing that shows a histogram of an image in frame 1; Fig. 6(b) is an explanatory drawing that shows a histogram of an image in frame 2; and Fig. 6(c) is an explanatory drawing that shows a method for correcting the pixel value of frame 2 through image projection.

Fig. 7 is an explanatory drawing that shows positions of photographing cells within a predetermined region of the charge coupled device with respect to frame 1 and frame 2.

Fig. 8 is a block diagram showing another structural example of a photographing apparatus of the present invention.

Fig. 9(a) is a perspective view of a mechanical shutter; and Fig. 9(b) is a front view of the essential portion of the mechanical shutter.

Fig. 10 is a timing chart that shows timing of various operations in a charge coupled device installed in the photographing apparatus.

Fig. 11 is a block diagram showing the controlling operation of the mechanical shutter.

Fig. 12 is a plan view that shows an image circle of photographing light, an image region that is used for photographing in the charge coupled device and a sensing region of a light-quantity sensor.

Fig. 13 is a block diagram that shows still another structural example of a photographing apparatus in accordance with the present invention.

Fig. 14(a), which shows another structural example of the mechanical shutter, is a plan view that shows a state in which the opening of the mechanical shutter is not closed; and Fig. 14(b) is a plan view that shows a state in which the opening of the mechanical shutter is closed.

## DESCRIPTION OF THE EMBODIMENTS

### [EMBODIMENT 1]

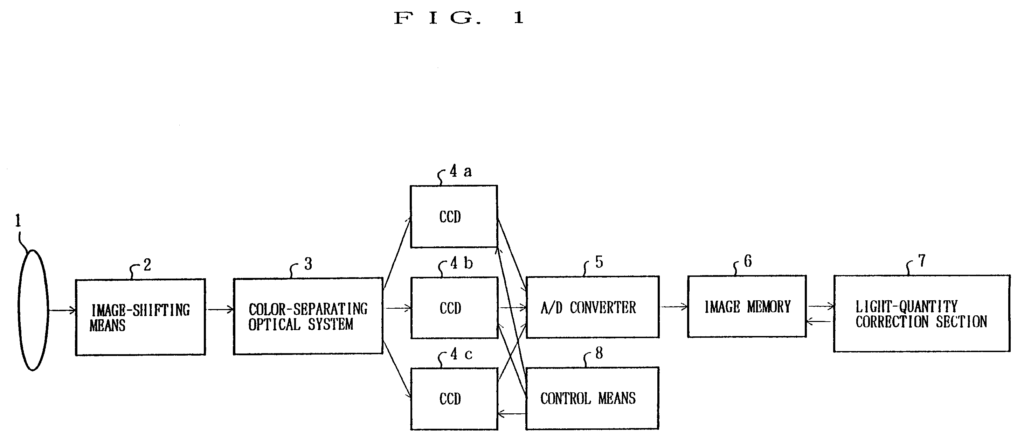

Referring to Figs. 1 through 7, the following description will discuss one embodiment of the present invention.

Fig. 1 shows a schematic construction of a photographing apparatus in accordance with the present embodiment. As illustrated in the Figure, the photographing apparatus of the present embodiment is provided with: a photographing lens 1, an image-shifting means 2, a color-separating optical system 3, charge coupled devices 4a, 4b and 4c, an A/D converter (Analog-to-Digital Converter) 5, an image memory 6, a light-quantity correcting section 7 and a control means 8.

The photographing lens 1 is an optical system which converges photographing light from a subject, not shown, and focuses it onto the light-receiving surfaces of the charge coupled devices 4a, 4b and 4c as an image.

The image-shifting means 2 relatively shifts the image of the subject that is focused onto the charge coupled devices 4a, 4b and 4c by a predetermined amount with respect to the charge coupled devices 4a, 4b and 4c on a two-dimensional basis. Here, supposing that the horizontal pixel pitch of the charge coupled devices 4a, 4b and 4c is Px and that the vertical pixel pitch is Py, the image-shifting means 2 of the present embodiment shifts the photographing light by (Px/2) in the horizontal direction as well as by (Py/2) in the vertical direction.

The image-shifting means 2 of the present embodiment is constituted by transparent parallel flat plates, a sensor for detecting the tilt angles of the transparent parallel flat plates, and a piezoelectric actuator for carrying out a feed-back process based upon the detection of the sensor so as to change the tilt angles of the transparent parallel flat plates (none of which are shown). Thus, the piezoelectric actuator changes the tilt angles of the transparent parallel flat plates so that the photographing light, which passes through the transparent parallel flat plates, is shifted with respect to the charge coupled devices 4a, 4b and 4c.

Additionally, for example, an image-shifting means 2, disclosed in U.S. Patent Application No. 08/654,734 applied by the same applicant as the present application, may be used as the image-shifting means 2 of this type.

The color-separating optical system 3 is an optical system which separates the photographing light that is made incident thereon through the image-shifting means 2 into primary colors, R (Red), G (Green) and B (Blue) and which makes the separated colors incident on the charge coupled devices 4a, 4b and 4c that correspond to the respective colors.

The charge coupled devices 4a, 4b and 4c release electric signals corresponding to the quantities (light intensities) of the received light. The charge coupled devices 4a, 4b and 4c, which correspond to, for example, the light rays of R, G and B, generate analog image signals of red, green and blue in response to the quantities of the received light. Here, each of the charge coupled devices 4a, 4b and 4c in the present embodiment is an all-pixel reading CCD (Charge Coupled Device) of the FIT (Frame Interline Transportation) type which is provided with pixels (light-receiving elements) of, for example, 720 horizontal pixels × 480 vertical pixels, that is, approximately the total 350,000 pixels, memory regions of 480 steps, vertical CCD shift registers for transmitting charges from the respective pixels to the memory regions, horizontal CCD shift resisters for transmitting the charges accumulated in the memory regions so as to output them as CCD outputs, and overflow drains.

Additionally, unlike the charge coupled device of the IT (Interline Transportation) type which will be described later, these charge coupled devices 4a, 4b and 4c of the FIT type have the memory regions; therefore, it is possible to transmit charges from the light-receiving elements to the memory regions at high speeds.

The A/D converter 5 digitizes the analog image signals outputted from the charge coupled devices 4a, 4b and 4c, that is, converts the analog image signals to digital image signals.

The image memory 6 (storage means) is a memory for storing the digital image signals that have been converted in the A/D converter 5. In other words, it stores image data corresponding to the electric signals outputted from the charge coupled devices 4a, 4b and 4c before and after the shift of the photographing light by the image-shifting means 2.

The light-quantity correcting section 7 (an image-data correction means, a light-quantity-difference correction means) has a function for correcting the difference in quantity of light between the two images obtained by the image shift. Additionally, the correction method for the difference between quantities of light will be discussed in detail later. Further, the control means 8 controls the charge coupled devices 4a, 4b and 4c upon photographing images of a subject by using the image shifting process.

Next, referring to Fig. 1, an explanation will be given of the operation of the photographing apparatus of the present embodiment. Here, in the following description, frame 1 indicates a state before an image shift and frame 2 indicates a state after the image shift in the case when images of two screens are photographed by using the image shift.

First, photographing light, released from a subject, not shown, is made incident on the image-shifting means 2 through the photographing lens 1. In the case of exposure at frame 1, the photographing light passes through the image-shifting means 2, as it is, without being shifted by the image-shifting means 2. In the case of exposure at frame 2, on the other hand, the photographing light is shifted, for example, by Px/2 and by Py/2 respectively in the horizontal direction and in the vertical direction with respect to the charge coupled devices 4a, 4b and 4c by the image-shifting means 2. Additionally, the operation of the image-shifting means 2 will be described in detail later.

The photographing light, released from the image-shifting means 2, is separated into three primary colors of R, G and B by the color-separating optical system 3. The separated photographing light rays are converted into analog electric signals of red, green and blue corresponding to the received light quantities (light intensities) by the charge coupled devices 4a, 4b and 4c. Thereafter, the respective analog electric signals are subjected to a correlative double sampling process, a gamma correction process, etc. by a conversion section, not shown, and then inputted to the A/D converter 5 as analog image signals. The A/D converter 5 converts the inputted analog image signals of red, green and blue into digital image data of red, green and blue respectively. The converted image data is stored in the image memory 6. Then the light-quantity correcting section 7 corrects the difference between quantities of light based upon the two pieces of image data stored in the image memory 6. Additionally, the correcting method for the difference between quantities of light will be described in detail later.

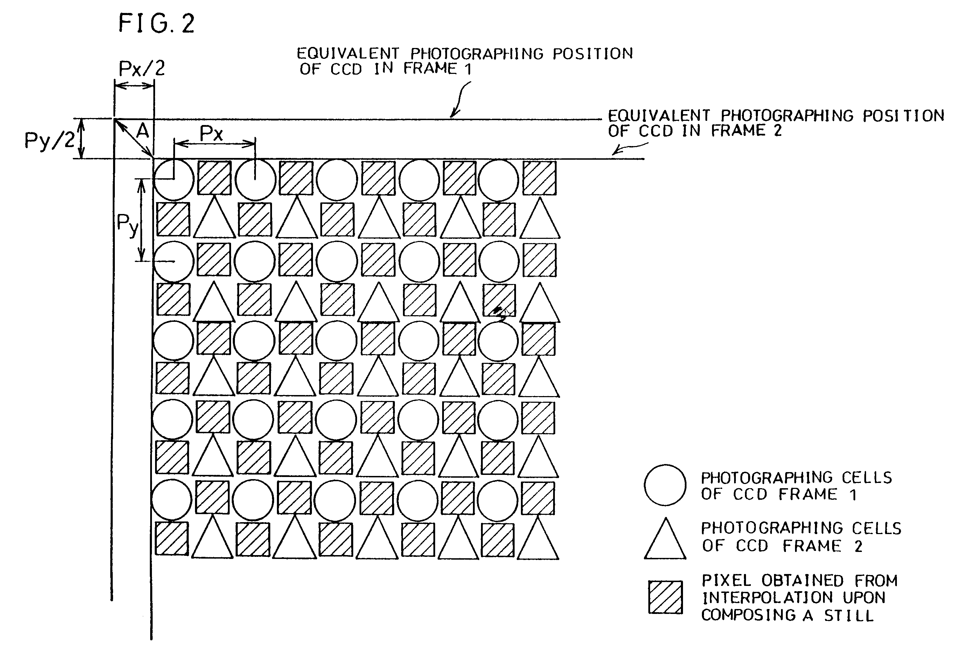

Referring to Fig. 2, an explanation will be given of the operation of the image-shifting means 2 in detail. Here, in an actual operation, images of a subject are shifted in parallel with each other by the image-shifting means 2; however, photographing positions of the charge coupled devices 4a, 4b and 4c, which are equivalent to the images of a subject in frame 1 and frame 2, are indicated so as to explain the operation.

Fig. 2 shows positions of the photographing cells of the charge coupled devices 4a, 4b and 4c in frame 1 and frame 2. More specifically, symbols "o" represent positions of photographing cells of the charge coupled devices 4a, 4b and 4c in frame 1, and symbols "△" represent positions of photographing cells of the charge coupled devices 4a, 4b and 4c in frame 2. As shown in the Figure, each of the photographing positions in frame 2 is given as a position which is attained by shifting the corresponding photographing position of frame 1 by 1/2 Px in the horizontal direction and by 1/2 Py in the vertical direction, that is, by shifting it in the direction of arrow A by the length of arrow A.

Moreover, in the Figure, pixels indicated by squares with slanting lines are those that can be filled through interpolation based on the adjacent pixels. Thus, it is possible to obtain a still image having 1440 horizontal pixels $\times$ 960 vertical pixels. In this case, with respect to the interpolation method, linear interpolation, Lagrange's interpolation of the second order or higher, cubic convolution interpolation, etc. have been known; and any of these methods may be adopted.

As described above, it is possible to raise the sampling rates in the horizontal direction and vertical direction in a spurious manner by interpolating images into points between the photographing cells of the charge coupled devices 4a, 4b and 4c, and consequently to achieve a still image with high resolution.

Additionally, the image of a subject may be shifted by the image-shifting means 2 by $(Px/2) \times m$ in the horizontal direction and by $(Py/2) \times n$ in the vertical direction (where m and n are odd numbers), and upon interpolation, the two images may be positioned spatially so as to composite a still image; this method also provides the same effect as described above.

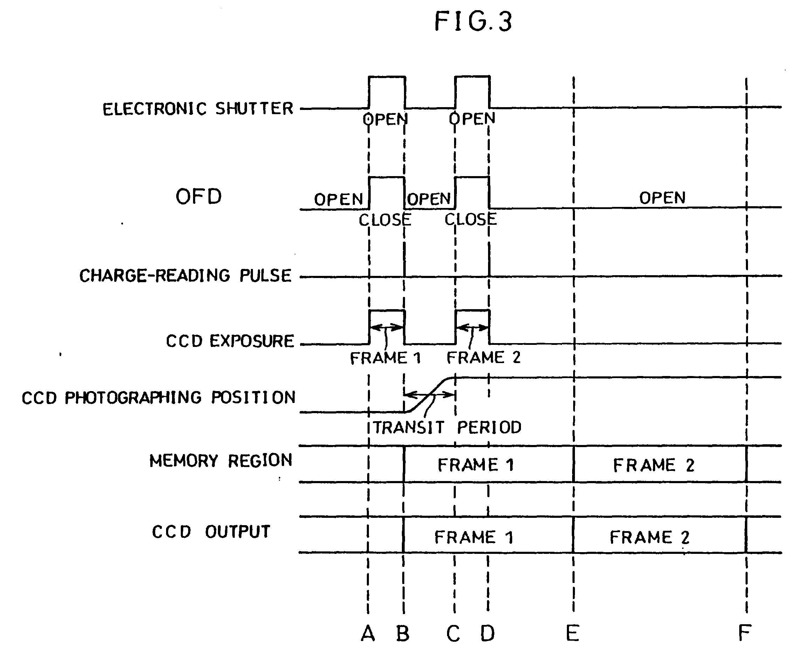

Referring to Fig. 3, the following description will discuss the timing of various operations in the charge coupled devices 4a, 4b and 4c. Here, in the present embodiment, exposure time is controlled by electronic shutters in the charge coupled devices 4a, 4b and 4c. Further, in the Figure, the charge coupled devices 4a, 4b and 4c are referred to simply as CCDs.

First, when the electronic shutters of the charge coupled devices 4a, 4b and 4c are opened, exposure of frame 1 is started. In other words, the overflow drains (referred to simply as OFD in the Figure) are closed so that the light-receiving elements in the charge coupled devices 4a, 4b and 4c start accumulating charges (Point A).

Next, the charges are transmitted from the light-receiving elements to the vertical CCD shift registers by using charge-reading pulses in the charge coupled devices 4a, 4b and 4c, thereby completing the exposure of frame 1. Thereafter, the charges are transmitted at high speeds from the vertical CCD shift registers to the memory regions on the charge coupled devices 4a, 4b and 4c. Then, the overflow drains are opened so as not to accumulate charges in the light-receiving elements in the charge coupled devices 4a, 4b and 4c.

Further, the image-shifting means 2 starts carrying out a shift in spatial positions of photographing light that is to be focused onto the charge coupled devices 4a, 4b and 4c, that is, a so-called image shift. At this time, the charges, stored in the memory regions, are successively transmitted to the horizontal CCD shift registers, and then outputted from the horizontal CCD shift registers as CCD outputs (Point B).

Next, upon completion of the image shift of the photographing light by the image-shifting means 2, the electronic shutters of the charge coupled devices 4a, 4b and 4c are opened, thereby starting exposure of frame 2. In other words, the overflow drains are closed so that the light-receiving elements in the charge coupled devices 4a, 4b and 4c start accumulating charges (Point C).

Next, the charges are transmitted from the light-receiving elements to the vertical CCD shift registers by using charge-reading pulses in the charge coupled devices 4a, 4b and 4c, thereby completing the exposure of frame 2 (Point D).

Successively, upon completion of the CCD outputs of frame 1, the charges of frame 2, remaining in the vertical CCD shift registers, are transmitted to the memory regions on the charge coupled devices 4a, 4b and 4c. Then, the charges, stored in the memory regions, are successively transmitted to the horizontal CCD shift registers, and then outputted from the horizontal CCD shift registers as CCD outputs (Point E).

Then, after, upon completion of the CCD outputs of frame 2, all the images in frame 2 have been read, photographing processes of the two frames, which are used for composing a still image before and after the image shift, are completed (Point F). In this manner, the photographing light before and after the image shift is taken in and stored.

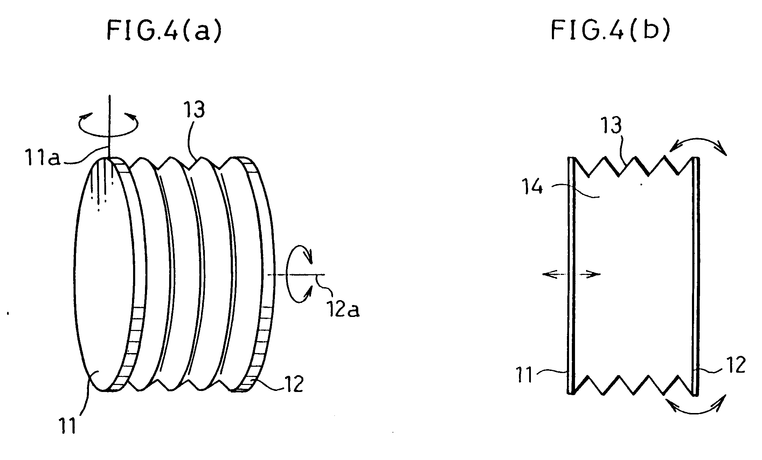

Additionally, in the present embodiment as explained, the image-shifting means 2 is constituted by transparent parallel flat plates, a sensor and a piezoelectric actuator; however, it may be constituted by, for example, a variable apex prism that is used to correct hand trembling. For example, ITEJ Technical Report (Vol. 17, No. 5, pp. 15-20, CE'93-3(JAN. 1993)) shows a variable apex prism of this type. Referring to Figs. 4(a) and 4(b), an explanation will be given of the variable apex prism reported in the above document.

Fig. 4(a) is a perspective view of the variable apex prism, and Fig. 4(b) is a side view of the variable apex prism. The variable apex prism is constituted by two glass plates 11 and 12 (transparent parallel flat plates) and a bellows portion 13 made of a special film that connects the glass plates 11 and 12. The bellows portion 13 is filled with liquid 14 having a high refractive index.

Rotary shafts 11a and 12a are attached to the glass plates 11 and 12 in a manner so as to orthogonally intersect each other; thus, for example, the frontal glass plate 11 is allowed to pivot in the horizontal direction by the rotation of the rotary shaft 11a and the rear glass plate 12 is allowed to pivot in the vertical direction by the rotation of the rotary shaft 12a. Here, although not shown in the Figure, a driving coil, a controlling coil and a rotation-angle detection sensor are attached to the rotary shafts 11a and 12a.

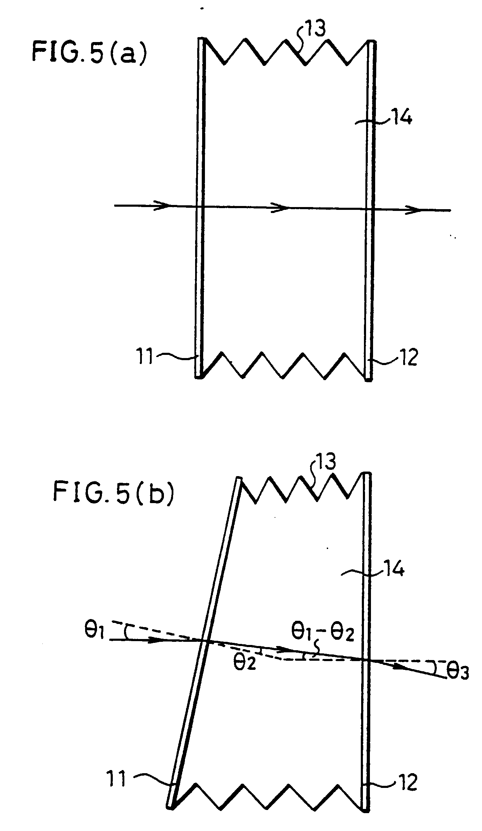

Next, referring to Figs. 5(a) and 5(b), the following description will discuss the principle of carrying out the image shift by using the variable apex prism.

Fig. 5(a) is a plan view that shows a state in which neither the glass plate 11 nor the glass plate 12 is allowed to pivot, and Fig. 5(b) is a plan view that shows a state in which only the glass plate 11 is allowed to pivot by an angle of $\theta_1$. In the state shown in Fig. 5(a) where the two glass plates 11 and 12 are maintained parallel to each other, light rays that are made incident on the variable apex prism travel straight.

In contrast, in the case when the glass plate 11 is inclined by $\theta_1$ as illustrated in Fig. 5(b), supposing that the releasing angle from the glass plate 11 is $\theta_2$, the incident angle on the glass plate 12 is $\theta_1 - \theta_2$, the releasing angle from the glass plate 12 is $\theta_3$, and the refractive index of the liquid 14 is n, the following relationships ① and ② hold:

$$\sin \theta_1 = n \cdot \sin \theta_2 \qquad \cdots \text{①}$$

$$n \cdot \sin(\theta_1 - \theta_2) = \sin \theta_3 \qquad \cdots \text{②}.$$

Here, in the case when the angle $\theta$ is assumed as a minute angle $\delta\theta$, since $\sin \delta\theta \cong \delta\theta$, the following approximations hold:

$$\delta\theta_1 = n \cdot \delta\theta_2 \qquad \cdots \text{①}'$$

$$n \cdot \delta(\theta_1 - \theta_2) = \delta\theta_3 \qquad \cdots \text{②}'.$$

Therefore, these relational equations ①' and ②' yield the following equation ③:

$$\delta\theta_3 / \delta\theta_1 = n - 1 \qquad \cdots \text{③}$$

For example, supposing that the refractive index n of the liquid 14 is 1.5, the tilt angle of the light axis is given as approximately one-half of the tilt angle of the glass plate 11. Thus, a so-called image-shifting process, which shifts the photographing light in a two-dimensional direction, can be carried out by inclining the two glass plates 11 and 12.

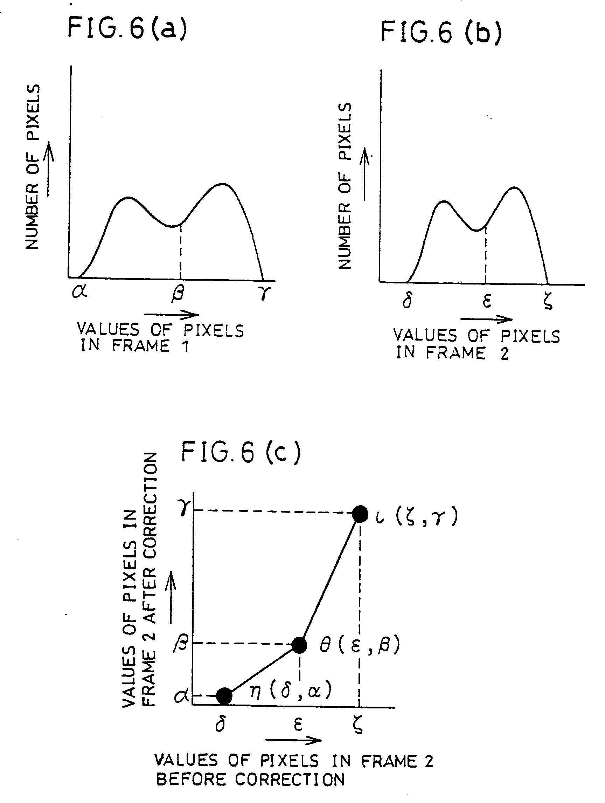

Next, referring to Figs. 6(a) through 6(c), an explanation will be given of a correcting method for the difference between quantities of photographing light before and after the image shift in the aforementioned light-quantity correcting section 7.

Fig. 6(a) shows a histogram of an image of frame 1, and Fig. 6(b) shows a histogram of an image of frame 2. The light-quantity correcting section 7 carries out correction of the difference in quantity of light between the two frames by combining the minimum value, average value and maximum value among the values of pixels (for example, values ranging from 0 to 255 in the case of 8-bit recording) in image data corresponding to the two images stored in the image memory 6 by using methods as described below: Here, the above-mentioned pixel values are, of course, given as values in proportion to the amounts of accumulated charge in the pixels of the charge coupled devices 4a, 4b and 4c.

Suppose that among pixel values in the image data corresponding to the image of frame 1, the minimum value, the average value and the maximum value are respectively represented by $\alpha$, $\beta$ and $\gamma$. Further, suppose that among pixel values in the image data corresponding to the image of frame 2, the minimum value, the average value and the maximum value are respectively represented by $\delta$, $\varepsilon$ and $\zeta$.

First, as illustrated in Fig. 6(c), pixel values in frame 2 before the light-quantity correction are plotted on the axis of abscissa, and pixel values in frame 2 after the light-quantity correction are plotted on the axis of ordinate; thus, point $\eta(\delta, \alpha)$, point $\theta(\varepsilon, \beta)$ and point $\iota(\zeta, \gamma)$ are obtained. Then, points $\eta$, $\theta$ and $\iota$ are connected by straight lights so as to carry out projection, and the pixel values $\delta$, $\varepsilon$ and $\zeta$ of frame 2 are respectively converted into $\alpha$, $\beta$ and $\gamma$ of frame 1.

More specifically, of the image data corresponding to the two images that have been obtained by the image shift and stored in the image memory 6, the image data related to the image of frame 1 is read from the image memory 6, and the minimum value $\alpha$, the average value $\beta$ and the maximum value $\gamma$ of the pixel values in the image data are found. Thereafter, the image data related to the image of frame 2 is read from the image memory 6, and the minimum value $\delta$, the average value $\epsilon$ and the maximum value $\zeta$ of the pixel values in the image data are found.

Next, a look-up table (LUP) for carrying out the above-mentioned processes is formed. Then, the pixel values of frame 2 that have been read are converted into pixel values of frame 1 by using the look-up table so that the pixel values of frame 2, stored in the image memory 6, are updated to pixel values after conversion by the use of the look-up table.

In the case when a still-image is combined, by using the image data of frame 2 after the light-quantity correction that has been stored in the image memory 6, the still-image composition is carried out by an interpolating operation using an interpolation circuit, not shown.

With the above-mentioned arrangement, predetermined pixel values of the image data after the shift (the minimum value, the average value and the maximum value), stored in the image memory 6, are respectively converted into predetermined pixel values in the image data before the shift by the light-quantity correction section 7; therefore, in the image data before and after the shift, the corresponding pixel values coincide with each other.

With this arrangement, the quantities of photographing light before and after the shift become equal to each other, thereby making it possible to eliminate appearance of distortion in the composite image due to the difference in quantity of light in the two images obtained by the image shift. Therefore, in the above-mentioned arrangement, it is possible to correct the difference between quantities of photographing light before and after the image shift, and consequently to prevent degradation in the image quality of the composite image due to the difference between quantities of light.

Moreover, in the above-mentioned arrangement, since the image-shifting means 2 carries out an image-shifting operation while executing a feed-back process, it is possible to carry out an image-shifting operation with high precision. Thus, it is also possible to prevent degradation in the image quality of the composite image due to errors between the actual shift quantity and the target shift quantity.

Additionally, in the present embodiment, upon correcting the difference in quantity of light between the two images obtained by the image shift, the correction is carried out by finding the minimum value, the average value and the maximum value of the pixel values for each frame as one unit; however, the present invention is not intended to be limited thereby. For example, one frame may be divided into a plurality of blocks and the correction may be carried out for each block as one unit.

For example, in the case of the present embodiment in which the number of the pixels of the charge coupled devices 4a, 4b and 4c is 720 horizontal pixels $\times$ 480 vertical pixels, one block may be constituted by pixels of, for exam-ple, 20 horizontal pixels $\times$ 20 vertical pixels; this makes 36 horizontal blocks $\times$ 24 vertical blocks as a whole, that is, a total of 864 blocks. For each block, the minimum, the average and the maximum values of the pixel values in frame 2 are made coincident with the minimum, the average and the maximum values of the pixel values in frame 1.

In this case, since the correction of the difference between quantities of light is carried out for each block, it is possible to carry out the correction of the difference between quantities of light more precisely as a whole. As a result, it is possible to positively prevent degradation in the image quality of the composite image due to the difference between quantities of photographing light before and after the shift. Further, since after the correction, the image data may be stored in the image memory 6 for each block, it is possible to minimize the capacity of the image memory 6. Additionally, in the case when greater errors occur in the border between the blocks, a smoothing operation may be carried out at the border.

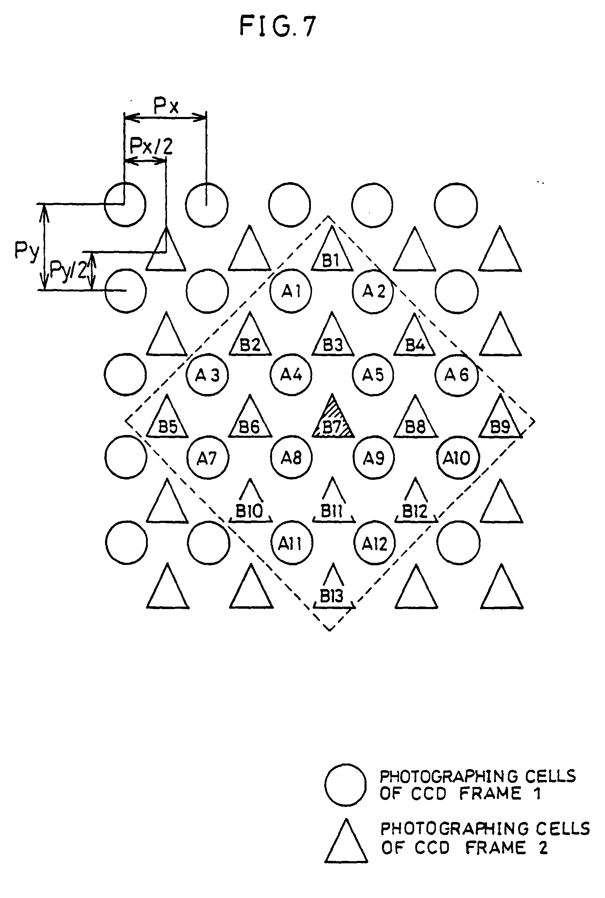

Moreover, except for the above-mentioned methods, for example, another light-quantity correction method may be proposed in which the difference between the average value of image data before the shift that belong to a predetermined region including pixels to be corrected and the average value of image data after the shift that belong to the predetermined region is added to the image data of the pixels to be corrected so that correction of the image data of the pixels in question can be carried out. Here, the above-mentioned difference is referred to as the difference between moving averages. For example, in the case when the value of photographing cell B7 after correction, which is a pixel to be corrected shown in Fig. 7, is to be found, the value of photographing cell B7 after correction can be obtained from the following equation by using photographing cells that are pixels surrounded by a rhombus indicated by the broken line in the Figure, that is, by using 12 points of photographing cells A1 through A12 in frame 1 as well as 13 points of photographing cells B1 through B13 in frame 2.

$$B7 = B7 + 1/12 \, (A1 + A2 + ... + A12) - 1/13 \, (B1 + B2 + ... + B13).$$

With the above-mentioned arrangement, the difference between the moving averages of the image data before and after the shift that belong to a predetermined region (in this case, pixels surrounded by the rhombus indicated by the broken line) is added to the image data of pixel B7 to be corrected by the light-quantity correction section 7 so that the image data B7 is corrected. This makes the predetermined image data before and after the shift coincident with each other, the difference between quantities of photographing light before and after the shift by the image-shifting means 2 is corrected. Therefore, the above-mentioned arrangement makes it possible to prevent degradation in the image quality of a composite image due to the difference between quantities of photographing light before and after the shift.

Additionally, in the present embodiment, the number of the charge coupled devices 4a, 4b and 4c is set at 720 horizontal pixels × 480 vertical pixels; however, even if another number of pixels, such as 640 horizontal pixels × 480 vertical pixels, may be adopted with the same effects as the present embodiment.

Moreover, in the present embodiment, the image-shifting operation is carried out in a diagonal direction with respect to the charge coupled devices 4a, 4b and 4c; however, for example, only the image shift in the horizontal direction or in the vertical direction may be carried out. In this case also, the above-mentioned light-quantity correction can be carried out to provide still image with high quality.

Additionally, in the present embodiment, the image-shifting operation is carried out by the image-shifting means 2; however, for example, one or a plurality of lenses constituting the optical system may be moved by a piezoelectric element, etc. while monitoring the amount of movement, so as to carry out an image-shifting operation. Further, the charge coupled devices 4a, 4b and 4c, themselves, may be moved by a piezoelectric element, etc. while monitoring the amount of movement so as to carry out an image-shifting operation. Moreover, the charge coupled devices 4a, 4b and 4c and the color-separating optical system 3 may be integrated into one unit, and this unit may be moved by using a piezoelectric element, etc. while monitoring the amount of movement, so as to carry out an image-shifting operation.

Furthermore, in the present embodiment, the charge coupled devices 4a, 4b and 4c of the FIT type are used; however, if a mechanical shutter is adopted, charge coupled devices of the IT type may be used instead of the charge coupled devices 4a, 4b and 4c of the FIT type.

This mechanical shutter is used to cut off photographing light after the image shift that is made incident on the charge coupled devices so that the photographing time required for the image shift can be shortened (exposure time to the charge coupled devices in the frame before the image shift + transition time for the image shift + exposure time to the charge coupled devices in the frame after the image shift). The application of the mechanical shutter cuts off the exposure in the frame in the half way after the image shift, thereby making it possible to shorten the photographing time, that is, the equivalent shutter speed, even in the case of the application of charge coupled devices of the IT type. Thus, it becomes possible to eliminate the difference between quantities of light before and after the image shift, and also to prevent degradation in the image quality of a composite image due to the difference between quantities of photographing light.

Additionally, in the present embodiment, with respect to two images obtained by the image shift, the quantity of light of the image of frame 2 is made coincident with the quantity of light of the image of frame 1. However, in the arrangement using the charge coupled devices 4a, 4b and 4b of the FIT type as shown in the present embodiment, the quantity of light of the image of frame 1 may be made coincident with the quantity of light of the image of frame 2, with the same effects as the present embodiment.

Moreover, since the closing time of the mechanical shutter is not completely zero, the quantity of light at the edge of the image of frame 2 is smaller than the quantity of light in the center portion of the image. Therefore, in the arrangement using the charge coupled devices of the IT type in combination with the mechanical shutter, it is more preferable to add the quantity of light of the image of frame 2 to the quantity of light of the image of frame 1, as is described in the present embodiment.

[EMBODIMENT 2]

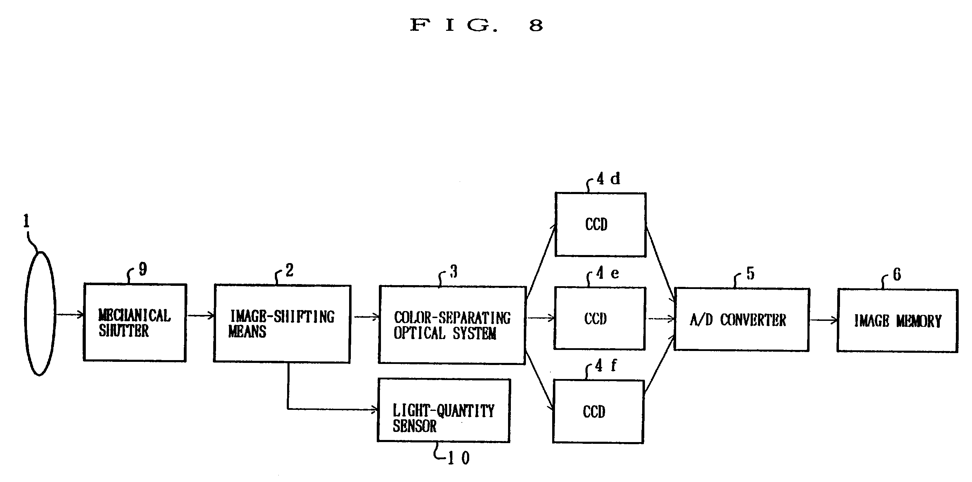

Referring to Figs. 8 through 12, the following description will discuss another embodiment of the present invention. Here, in the present embodiment, those members that have the same functions and that are described in embodiment 1 are indicated by the same reference numerals and the description thereof is omitted. Further, in the present embodiment, in lieu of the light-quantity correction section 7 and the control means 8 in the photographing apparatus of Embodiment 1, a mechanical shutter 9 and a light-quantity sensor 10 are installed. Therefore, in the present embodiment, an explanation will be mainly given of the construction and operation of the mechanical shutter 9 and the light-quantity sensor 10.

Further, in the present embodiment, instead of the charge coupled devices 4a, 4b and 4c (see Fig. 1) of the FIT (Frame Interline Transportation) type used in Embodiment 1, charge coupled devices 4d, 4e and 4f of the IT (Interline Transportation) type are used as illustrated in Fig. 8. Here, each of the charge coupled devices 4d, 4e and 4f in the present embodiment is an all-pixel reading CCD of the IT type which is provided with pixels (light-receiving elements) of, for example, 720 horizontal pixels × 480 vertical pixels (that is, approximately the total 350,000 pixels), vertical CCD shift registers for transmitting charges from the respective pixels so as to release them as CCD outputs, horizontal CCD shift resisters, and overflow drains. In other words, different from the aforementioned charge coupled devices 4a, 4b and 4c of the FIT type, the charge coupled devices 4d, 4e and 4f of the IT type are not provided with memory regions.

The mechanical shutter 9 (shutting means) adjusts the quantity of light from a subject image that is made incident thereon through the photographing lens 1, and directs it to the image-shifting means 2. Further, the light-quantity sensor 10 (image-data correction means) detects the quantity of light that is made incident on an image circle (which will be described later) of the photographing apparatus, and carries out a light-quantity correcting operation based upon the results of detection. In the present embodiment, the light-quantity sensor, which is constituted by, for example, photodiodes, is optically placed before the light-separating optical system 3.

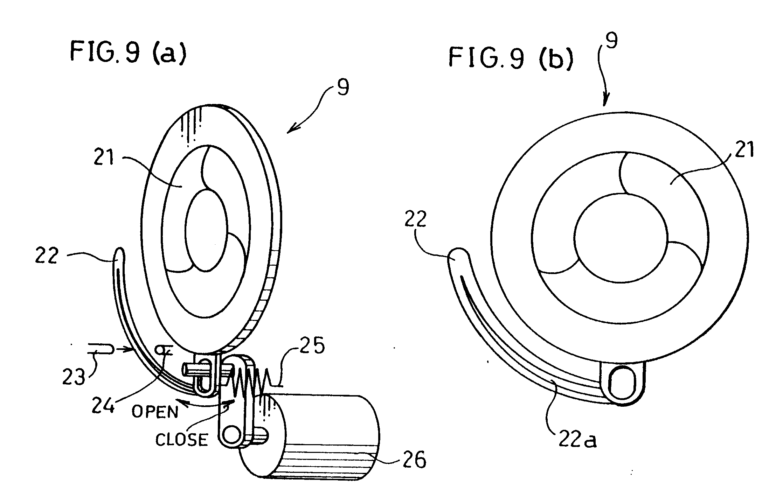

Referring to Figs. 9(a) and 9(b), an explanation will be given in detail of the construction of the mechanical shutter 9. Fig. 9(a) is a perspective view of the mechanical shutter 9, and Fig. 9(b) is a front view of an essential portion of the mechanical shutter 9.

As illustrated in Figs. 9(a) and 9(b), the mechanical shutter 9 is constituted by a shutter blade 21 (an opening-amount adjusting means), a sensing plate 22, a sensor light-source 23, an optical sensor 24 (an opening-amount detecting means), a spring 25 and a motor 26 (a driving means).

The shutter blade 21 is used for cutting off one portion of photographing light that is made incident on the charge coupled devices 4d, 4e and 4f by its opening and closing operations. The opening and closing operations adjust the area of the opening of the mechanical shutter 9 so that the quantity of light passing through the opening is adjusted.

The sensing plate 22 is used so as to detect the amount of opening of the mechanical shutter 9. The sensing plate 22, which is connected to a shutter-driving pin (not shown), is allowed to move simultaneously with the shutter blade 21. Moreover, the sensing plate 22 has a hole 22a that narrows toward the tip of the plate and widens toward the foot of the plate (toward the shutter-driving pin side). Thus, the position of the sensing plate 22 varies in cooperation with the opening and closing operations of the shutter blade 21, thereby making it possible to change the quantity of light that is released from the sensor light-source 23 and that is made incident on the optical sensor 24 after passing through the hole 22a.

The sensor light source 23 is a light source used for the optical sensor 24 that detects the opening status of the shutter blade 21. The optical sensor 24 is a sensor for generating an output in response to the quantity of light from the sensor light source 23 that passes through the hole 22a of the sensing plate 22. The amount of opening of the mechanical shutter 9 is monitored by this output. In the present embodiment, the optical sensor 24 is constituted by a photodiode.

The spring 25 provides a driving force when the shutter blade 21 carries out a closing operation. Further, the motor 26, which is a driving source for carrying out a speed control upon opening and closing the shutter blade 21, serves as an actuator that drives the mechanical shutter 9. In other words, upon opening the shutter blade 21, the shutter blade 21 is opened by the motor 26 against the force of the spring 25. Upon closing the shutter blade 21, the shutter blade 21 is, on the other hand, closed by the resultant force between the motor 26 and the spring 25.

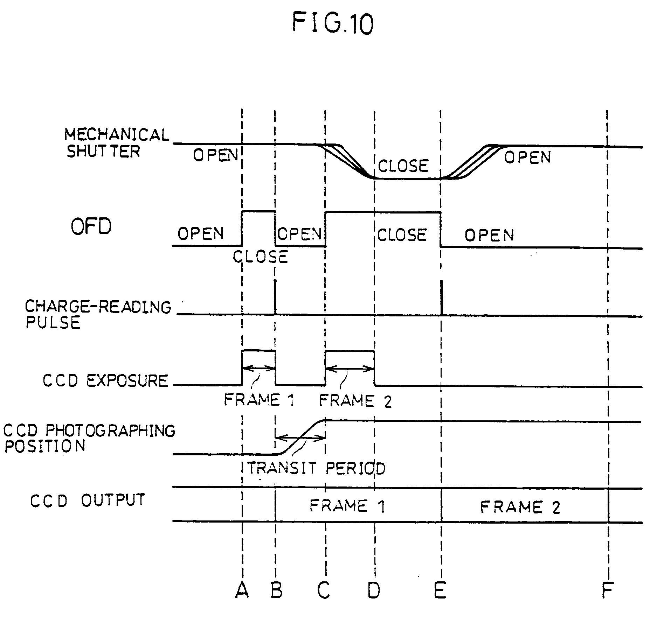

Next, referring to Fig. 10, an explanation will be given of the timing of various operations in the charge coupled devices 4d, 4e and 4f when an image-shifting operation is carried out by using the mechanical shutter 9. Here, in the present embodiment, exposure time before the image shift (hereinafter, referred to as frame 1) is controlled by the electronic shutters of the charge coupled devices 4d, 4e and 4f, and exposure time after the image shift (hereinafter, referred to as frame 2) is controlled by the mechanical shutter 9 while the overflow drains of the charge coupled devices 4d, 4e and 4f are closed. Additionally, the mechanical shutter 9 is normally kept at an open state. Further, in Fig. 10, the charge coupled devices 4d, 4e and 4f are briefly referred to as CCDs.

First, when the electronic shutters of the charge coupled devices 4d, 4e and 4f are opened, exposure in frame 1 is started. In other words, the overflow drains (referred to simply as OFDs in the Figure) are closed, and accumulations of charges are started in the light-receiving elements in the charge coupled devices 4d, 4e and 4f (Point A).

Next, the charges are transferred from the light-receiving elements to the vertical CCD shift registers by charge-reading pulses in the charge coupled devices 4d, 4e and 4f, thereby completing the exposure in frame 1. Then, the overflow drains are opened so as not to accumulate charges in the light-receiving elements of the charge coupled devices 4d, 4e and 4f. Thus, a so-called image-shifting operation, that is, a shift in spatial positions of photographing light that is converged on the charge coupled devices 4d, 4e and 4f, is started by the image-shifting means 2. At this time, the charges are successively transferred from the vertical CCD shift registers to the horizontal CCD shift registers, and then released from the horizontal CCD shift registers as CCD outputs (Point B).

Next, upon completion of the image shift of the photographing light by the image-shifting means 2, exposure in frame 2 is started. In other words, the overflow drains are closed, and accumulations of charges in the light-receiving elements of the charge coupled devices 4d, 4c and 4f are started. In this case, the mechanical shutter 9 is closed; and the details of the closing process, such as timing, will be described later (Point C).

Upon completion of the closing operation of the mechanical shutter 9, the photographing light, which has been made incident on the charge coupled devices 4d, 4e and 4f, is cut off, thereby completing the exposure in frame 2 (Point D).

Successively, upon completion of the CCD outputs in frame 1, the charges are transferred from the light-receiving elements to the vertical CCD shift registers by the charge-reading pulses in the charge coupled devices 4d, 4e and 4f. Then, the charges of frame 2, which remain in the vertical CCD shift registers, are successively transferred to the horizontal CCD shift registers, and then released from the horizontal CCD shift registers as CCD outputs. The opening operation of the mechanical shutter 9 is carried out after this point of time (Point E).

At the time when, upon completion of the CCD outputs of frame 2, all the image of frame 2 has been read, photographing processes of two screens that are used for a still-image composition before and after the image shift are completed (Point F). In this manner, the photographing lights before and after the image shift are taken.

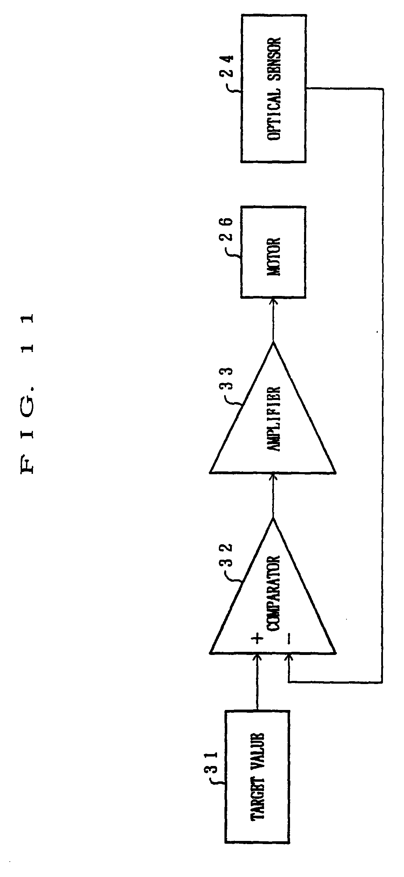

In this case, a mechanical-shutter driving pattern is preliminarily formed so that the amount of exposure in the charge coupled devices 4d, 4e and 4f of frame 2 is set equal to that of frame 1 in response to the exposure time of the electronic shutter in frame 1; thus, by carrying out control based upon the driving pattern, it becomes possible to eliminate the difference in quantity of light between the two screens that are obtained before and after the image shift. Referring to Fig. 11, an explanation will be given of a controlling method for the mechanical shutter 9.

In addition to the various members as described above, the mechanical shutter 9 of the present embodiment is provided with a comparator 32 (comparison means) and an amplifier 33. The comparator 32 compares a target value 31 which is given as a mechanical-shutter driving-pattern signal with an output signal fed back from the optical sensor 24, and outputs the corresponding difference to the amplifier 33. Further, the amplifier 33 amplifies the output signal from the comparator 32 at a predetermined rate of amplification. The signal thus amplified serves as a driving signal for the motor 26.

With this arrangement, at Point C in Fig. 10, the mechanical-shutter driving-pattern signal, which corresponds to the exposure time of the electronic shutter, is released as the target value 31. Then, the driving-pattern signal and the output signal from the optical sensor 24 is compared by the comparator 32, and the corresponding difference is outputted to the amplifier 33. Then, the signal, outputted to the amplifier 33, is amplified at a predetermined rate of amplification by the amplifier 33 so as to form the motor driving signal. The motor is driven in response to the motor-driving signal so that the opening and closing operations of the mechanical shutter 9 are carried out. In this way, the shutter speed of the mechanical shutter 9 is controlled while the optical sensor 24 detects the amount of opening of the shutter so that the opening and closing operations of the mechanical shutter 9 are carried out. Therefore, the above-mentioned arrangement makes it possible to suppress irregularities in the driving speed of the mechanical shutter 9.

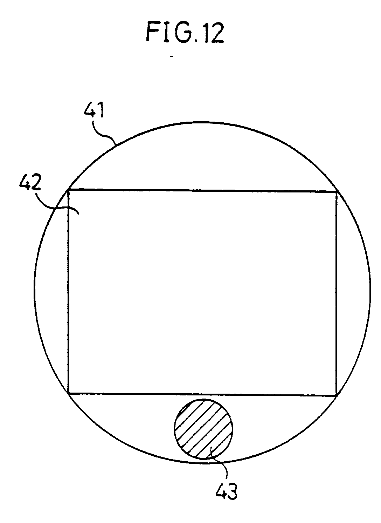

Next, referring to Fig. 12, an explanation will be given of the light-quantity sensor 10 in detail.

In Fig. 12, an image circle 41 with a round shape is an image circle of photographing light in the optical system. Further, a charge-coupled-device image region 42 with a rectangular shape is an image region that is used for photographing carried out by the charge coupled devices 4d, 4e and 4f. Moreover, a sensing region 43, indicated by slanting lines, is a region used for sensing carried out by the light-quantity sensor 10.

As clearly shown by the Figure, the charge-coupled-device image region 42 is located within the image circle 41, and all the region within the image circle 41 is not necessarily utilized for photographing carried out by the charge coupled devices 4d, 4e and 4f. Therefore, the light-quantity sensor 10 senses the quantity of incident light by utilizing the region other than the charge-coupled-device image region 42 within the image circle 41, and carries out a light-quantity correcting operation based upon the results.

Additionally, in the present embodiment, the light-quantity sensor 10 is optically placed before the color-separating optical system 3 so as to carry out the sensing operation for the quantity of incident light; however, the light-quantity sensor 10 may be placed at any position within the optical system with the same effects.

An explanation will be given of a correcting method for the difference in light quantity carried out by the light-quantity sensor 10.

First, the light-quantity sensor 10 detects a quantity of light $Q_1$ that is made incident on the light-quantity sensor 10 within the exposure time in the charge coupled devices 4d, 4e and 4f in frame 1 (that is, exposure time controlled by the electronic shutters of the charge coupled devices 4d, 4e and 4f). At this time, the detection of the quantity of light $Q_1$ is carried out by integrating the quantity of incident light from the exposure starting time (reset time) by the electronic shutter.

Next, the light-quantity sensor 10 detects a quantity of light $Q_2$ that is made incident on the light-quantity sensor 10 within the exposure time in the charge coupled devices 4d, 4e and 4f in frame 2 (that is, exposure time in the charge coupled devices 4d, 4e and 4f controlled by the mechanical shutter 9). At this time, the detection of the quantity of light $Q_2$ is carried out by integrating the quantity of incident light from Point C (reset time) to Point D in Fig. 10.

Then, the difference in quantity of light between frame 1 and frame 2 is corrected by subjecting the image in frame 2 to multiplication by the ratio of the resulting quantities of light $Q_1$ and $Q_2$, that is, $Q_1/Q_2$, as a correction factor. With respect to the timing in which the multiplication by the correction factor $Q_1/Q_2$ is carried out, it is carried out when the image signals are read from the charge coupled devices 4d, 4e and 4f, or when the image signals are stored in the image memory 6.

With the above-mentioned arrangement, the image data, which is outputted from the charge coupled devices 4d, 4e and 4f after the shift of the photographing light, is corrected in accordance with the ratio of quantities of light before and after the shift that have been detected by the light-quantity sensor 10; therefore, no difference appears between the quantities of photographing light before and after the shift. Consequently, this arrangement makes it possible to prevent degradation in the image quality of the composite image due to the difference between quantities of photographing light before and after the shift.

Additionally, in the present embodiment, the number of pixels in the charge coupled devices 4d, 4e and 4f is set at 720 horizontal pixels × 480 vertical pixels; however, for example, another number of pixels, such as 640 horizontal pixels × 480 vertical pixels, may be adopted with the same effects.

Moreover, in the present embodiment, charge coupled devices of the IT type are used as the charge coupled devices 4d, 4e and 4f; however, charge coupled devices of the FIT type may also be adopted with the same functions and effects as described above. In this case, no mechanical shutter 9 is, of course, required.

[EMBODIMENT 3]

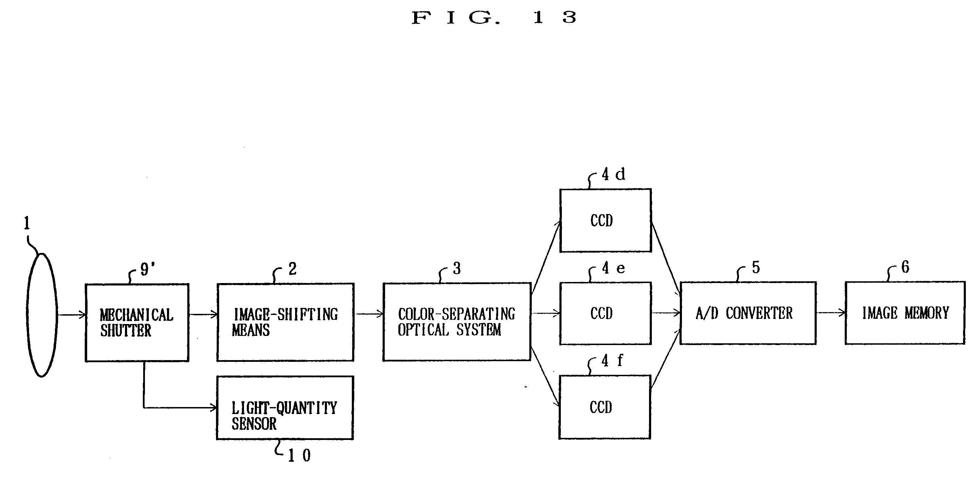

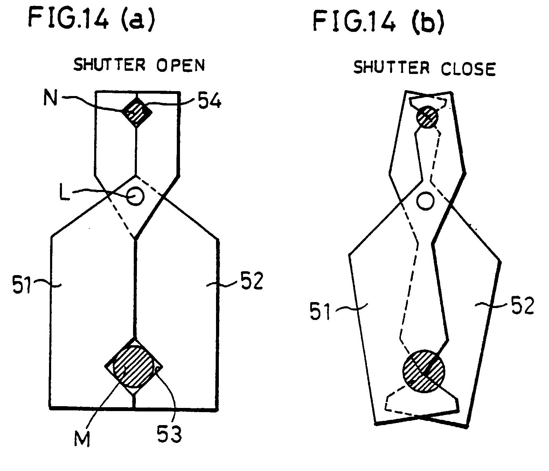

Referring to Figs. 13 and 14, the following description will discuss still another embodiment of the present invention. Here, in the present embodiment, those members that have the same functions and that are described in embodiment 1 or 2 are indicated by the same reference numerals and the description thereof is omitted. Further, in the present embodiment, in lieu of the mechanical shutter 9 used in Embodiment 2, a mechanical shutter 9' is installed, and the installation position of the light-quantity sensor 10 is altered. In other words, the present embodiment is the same as Embodiment 2 except for the construction and operation of the mechanical shutter 9' and the operation of the light-quantity sensor 10. Therefore, the following description will mainly discuss the construction and operation of the mechanical shutter 9' and the operation of the light-quantity sensor 10.

As illustrated in Figs. 14(a) and 14(b), the mechanical shutter 9' (shutter means) in the present embodiment is constituted by light-shielding members 51 and 52 that are independently free to rotate centered on point L. Further, openings 53 (first opening) and 54 (second opening) are closed by predetermined amounts by rotations of the light-shielding members 51 and 52. Here, photographing light, which is made incident on the charge coupled devices 4d, 4e and 4f, is allowed to pass through opening 53. Hereinafter, the light path of the photographing light is referred to as light path M.

In the present embodiment, the optical system is designed so that, among photographing light rays that are made incident on the photographing lens 1, light rays that are not used for photographing carried out in the charge coupled devices 4d, 4e and 4f are allowed to pass through opening 54. In other words, one portion of the photographing light rays that are made incident on the photographing lens 1 is allowed to pass opening 54. Hereinafter, the light path of the light ray passing through opening 54 is referred to as light pass N. Here, the light-quantity sensor 10 is designed to detect the quantity of light that is directed through the light path N.

Supposing that the quantity of light that passes through opening 53 is $Q_M$ and the quantity of light that passes through opening 54 is $Q_N$, the relationship represented by the following equation holds (when light rays parallel to the light axis are incident from the light source):

$$(Q_N)^{1/2} = k \cdot (Q_M)^{1/2},$$

where k = (radius in the cross section of light path N / radius in the cross section of light path M). Therefore, the following equation holds:

$$Q_N = k^2 \cdot Q_M.$$

This shows that the quantity of light $Q_N$ passing through opening 54 and the quantity of light $Q_M$ passing through opening 53 are proportional to each other. Therefore, the quantity of light $Q_M$ can be found by monitoring the quantity of light $Q_N$ by using the light-quantity sensor 10.

Accordingly, in the present embodiment, the light-quantity correction is carried out based upon the value of the quantity of light $Q_M$ that is obtained as described below. With respect to the timing of the various operations in the charge coupled devices 4d, 4e and 4f upon carrying out the image shift by using the mechanical shutter 9', it is the same as that of Embodiment 2; and the description thereof is omitted.

First, a quantity of light $Q_{N1}$ in frame 1 is detected through monitoring carried out by the light-quantity sensor 10 as described above, and based upon the quantity of light $Q_{N1}$, a quantity of light $Q_{M1}$ that passes through opening 53 within the exposure time in the charge coupled devices 4d, 4e and 4f (that is, exposure time controlled by the electronic shutters of the charge coupled devices 4d, 4e and 4f). At this time, the detection of the quantity of light $Q_{N1}$ is carried out by integrating the quantity of incident light from the exposure starting time (reset time) by the electronic shutter.

Next, in the same manner, a quantity of light $Q_{N2}$ in frame 2 is detected through monitoring carried out by the light-quantity sensor 10, and based upon the quantity of light $Q_{N2}$, a quantity of light $Q_{M2}$ that passes through opening 54 within the exposure time in the charge coupled devices 4d, 4e and 4f (that is, exposure time in the charge coupled devices 4d, 4e and 4f controlled by the mechanical shutter 9'). At this time, the detection of the quantity of light $Q_{N2}$ is carried out by integrating the quantity of incident light from Point C (reset time) to Point D in Fig. 10.

Then, the difference in quantity of light between frame 1 and frame 2 is corrected by subjecting the image data in frame 2 to multiplication by the ratio of the resulting quantities of light $Q_{M1}$ and $Q_{M2}$, that is, $Q_{M1}/Q_{M2}$, as a correction factor. With respect to the timing in which the multiplication by the correction factor $Q_{M1}/Q_{M2}$ is carried out, it is carried out when the image signals are read from the charge coupled devices 4d, 4e and 4f, or when the image signals are stored in the image memory 6.

With the above-mentioned arrangement, the image data after the shift is corrected in accordance with the ratio of quantities of light $Q_{M1}$ and $Q_{M2}$ that correspond to quantities of light $Q_{N1}$ and $Q_{N2}$ before and after the shift that have been detected by the light-quantity sensor 10; therefore, no difference appears between the quantities of photographing light before and after the shift. Consequently, this arrangement makes it possible to prevent degradation in the image quality of the composite image due to the difference between quantities of photographing light before and after the shift.

Additionally, in the mechanical shutter 9' used in the present embodiment, another arrangement may be adopted wherein the photographing light, which is made incident on the charge coupled devices 4d, 4e and 4f, is allowed to pass one of the openings, and light, released from a reference light source such as an LED (Light Emitting Diode), is allowed to pass through the other opening; thus, the amount of opening of the mechanical shutter 9' is detected.

As described above, the photographing apparatus of the present invention, which photographs photographing light from a subject that is made incident through a photographing lens by using charge coupled devices having a plurality of pixels, is provided with: an image-shifting means for shifting the photographing light relative to the charge coupled device by a predetermined amount on a two-dimensional basis; a storage means for storing image data based on electric signals outputted from the charge coupled device, before and after the shift of the photographing light carried out by the image-shifting means; and a light-quantity difference correction means for correcting the difference between quantities of photographing light before and after the shift by converting a predetermined pixel value in the image data after the shift stored in the storage means into a predetermined pixel value in the image data before the shift so as to make the two pixel values coincident with each other.

In the above-mentioned arrangement, the photographing light, which is released from a subject and made incident through the photographing lens, is shifted by a predetermined amount relative to the charge coupled device on a two-dimensional basis, and focused onto the charge coupled device to form an image. The charge coupled device is constituted by, for example, a charge coupled device of the frame-interline-transferring type having a memory region. Thus, the image data based on the electric signals outputted from the charge coupled device is stored in the storage means before and after the shift.

At this time, the predetermined pixel value in the image data after the shift, stored in the storage means, is converted into the predetermined pixel value in the image data before the shift by the light-quantity difference correction means; therefore, the predetermined pixel values are made coincident with each other in the image data before and after the shift.

In other words, for example, when minimum values, average values and maximum values among pixel values in the respective image data before and after the shift are taken into consideration, the light-quantity difference correction means carries out the above-mentioned operation so that the minimum values, the average values and the maximum values among pixel values in the respective image data are respectively made coincident with each other.

With this arrangement, the quantities of photographing light before and after the shift become equal to each other, thereby making it possible to eliminate appearance of distortion in the composite image due to the difference in quantity of light in the two images obtained by the image shift. Therefore, in the above-mentioned arrangement, it is possible to correct the difference between quantities of photographing light before and after the image shift, and consequently to prevent degradation in the image quality of the composite image due to the difference between quantities of light.

Moreover, the photographing apparatus of the present invention is preferably provided with a shutter means for cutting off photographing light after the shift that is directed to the charge coupled device, in order to shorten the photographing time required for the image shift.

With the above-mentioned arrangement, the shutting means, which is used for shortening the photographing time required for the image shift, makes it possible to eliminate the difference between quantities of light before and after the image shift. Consequently, it becomes possible to prevent degradation in the image quality of the composite image due to the difference between quantities of photographing light.

Furthermore, the photographing apparatus of the present invention is preferably designed as follows: The light-quantity difference correction means divides each of the image data before and after the shift stored in the storage means into a plurality of blocks, and in each of the blocks, a predetermined pixel value of the image data after the shift is converted into a predetermined pixel value in the image data before the shift so that the difference between quantities of photographing light before and after the shift is corrected by making the two pixel values coincident with each other.

In this arrangement, each of the image data before and after the shift is divided into a plurality of blocks, and the correction of the difference between quantities of light is carried out for each block; therefore, it is possible to carry out the correction of the difference between quantities of light more precisely as a whole. As a result, it is possible to positively prevent degradation in the image quality of the composite image due to the difference between quantities of photographing light before and after the shift.

Further, the photographing apparatus of the present invention is preferably designed as follows: The difference between the moving averages of the image data before and after the shift that belong to a predetermined region is added to a pixel to be corrected by the light-quantity difference correction means so that the image data of the pixel is corrected.

The light-quantity difference correction means adds the difference between the moving averages of the image data before and after the shift that belong to a predetermined region to a pixel to be corrected so that the image data of the pixel is corrected. Thus, the pieces of predetermined image data before and after the shift are made coincident with each other, thereby making it possible to correct the difference between quantities of photographing light before and after the shift carried out by the image-shifting means. Therefore, with the above-mentioned arrangement, it becomes possible to prevent degradation in the image quality of the composite image due to the difference between quantities of photographing light before and after the shift.

Moreover, the photographing apparatus of the present invention, which photographs photographing light from a subject that is made incident through a photographing lens by using charge coupled devices having a plurality of pixels, is provided with: an image-shifting means for shifting the photographing light relative to the charge coupled device by a predetermined amount on a two-dimensional basis; and a correction means for detecting the quantities of incident photographing light before and after the shift carried out by the image-shifting means so as to correct the image data before and after the shift based upon the ratio of the quantities of light before and after the shift.

In the above-mentioned arrangement, the photographing light, which is released from a subject and made incident through the photographing lens, is shifted by a predetermined amount relative to the charge coupled device on a two-dimensional basis, and focused onto the charge coupled device to form an image. The charge coupled device is constituted by, for example, a charge coupled device of the frame-interline-transferring type having a memory region.

In this case, the image data, outputted from the charge coupled device after the shift of photographing light, is corrected in accordance with the ratio of quantities of light before and after the shift that have been detected by the correction means. In other words, the image data after the shift is corrected, for example, by multiplying the image data after the shift by a ratio (the quantity of light before the shift)/(the quantity of light after the shift). This makes the brightnesses of images before and after the shift virtually equal to each other, thereby eliminating the difference between quantities of photographing light before and after the shift. Therefore, with the above-mentioned arrangement, it becomes possible to prevent degradation in the image quality of the composite image due to the difference between quantities of photographing light before and after the shift.

Moreover, the photographing apparatus of the present invention is preferably provided with a shutter means for cutting off photographing light after the shift that is directed to the charge coupled device, in order to shorten the photographing time required for the image shift.

With the above-mentioned arrangement, the shutting means, which is used for shortening the photographing time required for the image shift, makes it possible to eliminate the difference between quantities of light before and after the image shift. Consequently, it becomes possible to prevent degradation in the image quality of the composite image due to the difference between quantities of photographing light.

Furthermore, in the photographing apparatus of the present invention, the above-mentioned shutting means is preferably designed to have a first opening through which photographing light, directed to the charge coupled devices, passes and a second opening through which one portion of the photographing light directed to the photographing lens passes. Here, the correction means detects respective quantities of light passing through the second opening before and after the shift of photographing light carried out by the image-shifting means, and corrects the image data after the shift based upon the ratio of the quantities of light before and after the shift.

With the above-mentioned arrangement, the correction means detects the light passing through the second opening of the shutter means, that is, respectively detects quantities of one portion of photographing light directed to the photographing lens before and after the shift. In this case, the image data after the shift can be corrected based upon the ratio of the quantities of light before and after the shift that have been detected by the correction means; therefore, no difference appears between quantities of photographing light before and after the shift. Therefore, it becomes possible to prevent degradation in the image quality of the composite image due to the difference between quantities of photographing light before and after the shift.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A photographing apparatus comprising:

   a charge coupled device, having a plurality of pixels, for photographing light from a subject;
   image-shifting means for shifting the photographing light relative to the charge coupled device by a predetermined amount on a two-dimensional basis; and

image-data correction means for correcting image data before or after the shift so that image data corresponding to the photographing light before the shift made by the image-shifting means is coincident with image data corresponding to the photographing light after the shift made by the image-shifting means.

2. The photographing apparatus as defined in claim 1, further comprising:

storage means for storing respective image data based upon electric signals that have been outputted from the charge coupled device before and after the shift of photographing light carried out by the image-shifting means, wherein the image-data correction means includes light-quantity difference correction means for correcting the difference between quantities of photographing light before and after the shift by converting a predetermined pixel value in the image data after the shift stored in the storage means into a predetermined pixel value in the image data before the shift so as to make the two pixel values coincident with each other.

3. The photographing apparatus as defined in claim 2, wherein: the light-quantity difference correction means divides each of the image data before and after the shift stored in the storage means into a plurality of blocks, and in each of the blocks, a predetermined pixel value of the image data after the shift is converted into a predetermined pixel value in the image data before the shift so that the difference between quantities of photographing light before and after the shift is corrected by making the two pixel values coincident with each other.

4. The photographing apparatus as defined in claim 2, wherein the light-quantity difference correction means corrects image data of a pixel to be corrected by adding to the image data of the pixel to be corrected the difference between the average value of image data before the shift that belong to a predetermined region including the pixel to be corrected and the average value of image data after the shift that belong to the predetermined region to the pixel to be corrected.

5. The photographing apparatus as defined in claim 2, wherein supposing that the horizontal pixel pitch is Px and the vertical pixel pitch is Py in the charge coupled device, the image-shifting means shifts the photographing light by (Px/2) × m in the horizontal direction and (Py/2) × n in the vertical direction on the photographing surface of the charge coupled device, where each of m and n is an odd number not less than 1.

6. The photographing apparatus as defined in claim 2, wherein the charge coupled device is a charge coupled device of the frame-interline-transferring type.

7. The photographing apparatus as defined in claim 2, further comprising:

shutter means for cutting off photographing light after the shift that is directed to the charge coupled device, in order to shorten the photographing time required for the image shift.

8. The photographing apparatus as defined in claim 7, wherein: the light-quantity difference correction means divides each of the image data before and after the shift stored in the storage means into a plurality of blocks, and in each of the blocks, a predetermined pixel value of the image data after the shift is converted into a predetermined pixel value in the image data before the shift so that the difference between quantities of photographing light before and after the shift is corrected by making the two pixel values coincident with each other.

9. The photographing apparatus as defined in claim 7, wherein the light-quantity difference correction means corrects image data of a pixel to be corrected by adding to the image data of the pixel to be corrected the difference between the average value of image data before the shift that belong to a predetermined region including the pixel to be corrected and the average value of image data after the shift that belong to the predetermined region to the pixel to be corrected.

10. The photographing apparatus as defined in claim 7, wherein the charge coupled device is a charge coupled device of the interline-transferring type.

11. The photographing apparatus as defined in claim 7, wherein the shutter means is a mechanical shutter.

12. The photographing apparatus as defined in claim 1, wherein the image-data correction means respectively detects quantities of the photographing light before and after the shift carried out by the image-shifting means, and corrects the image data after the shift based upon the ratio of the quantities of light before and after the shift.

**13.** The photographing apparatus as defined in claim 12, further comprising:

shutter means for cutting off photographing light after the shift that is directed to the charge coupled device, in order to shorten the photographing time required for the image shift.

**14.** The photographing apparatus as defined in claim 13, wherein the shutter means further comprises:

opening-amount adjusting means for adjusting the area of an opening of the shutter means by opening and closing operations thereof;
opening-amount detector for detecting the opening amount;
comparison means for comparing a detection signal from the opening-amount detector and a closing signal for closing the shutter means in accordance with exposure time provided by a shutter member in the charge coupled device; and
driving means for driving the shutter means based on an output from the comparison means.

**15.** The photographing apparatus as defined in claim 13, wherein: the shutter means includes a first opening through which photographing light, directed to the charge coupled device, is allowed to pass and a second opening through which one portion of light except for the photographing light that is directed to the charge coupled device is allowed to pass, and the correction means detects respective quantities of light passing through the second opening before and after the shift of photographing light carried out by the image-shifting means, and corrects the image data after the shift based upon the ratio of the quantities of light before and after the shift.

**16.** The photographing apparatus as defined in claim 15, wherein supposing that the quantity of light at the first opening is $Q_1$ and the quantity of light at the second opening is $Q_2$, the image-data correction means corrects the image data by multiplying the image data after the shift by a factor of $Q_1/Q_2$.

**17.** The photographing apparatus as defined in claim 13, wherein: the shutter means includes a first opening through which a first light, directed to the charge coupled device, is allowed to pass and a second opening through which one portion of a second light except for the first light is allowed to pass, and the correction means, after having detected respective quantities of the second light passing through the second opening before and after the shift of photographing light carried out by the image-shifting means, finds quantities of the first light passing through the first opening before and after the shift based on the detected quantities of the second light, and then corrects the image data after the shift based upon the ratio of the quantities of the first light.

**18.** The photographing apparatus as defined in claim 17, wherein supposing that the quantity of the first light that passes through the first opening before the shift of the photographing light is $Q_{M1}$ and the quantity of the first light that passes through the first opening after the shift of the photographing light is $Q_{M2}$, the image-data correction means corrects the image data by multiplying the image data after the shift by a factor of $Q_{M1}/Q_{M2}$.

**19.** The photographing apparatus as defined in claim 13, wherein the shutter means is a mechanical shutter.

# F I G.  1

FIG. 2

EQUIVALENT PHOTOGRAPHING POSITION OF CCD IN FRAME 1

EQUIVALENT PHOTOGRAPHING POSITION OF CCD IN FRAME 2

○ PHOTOGRAPHING CELLS OF CCD FRAME 1

△ PHOTOGRAPHING CELLS OF CCD FRAME 2

▨ PIXEL OBTAINED FROM INTERPOLATION UPON COMPOSING A STILL

# FIG. 3

EP 0 836 318 A2

FIG.4(a)

FIG.4(b)

FIG.5(a)

FIG.5(b)

FIG.6(a)

FIG.6 (b)

FIG.6 (c)

# FIG. 7

PHOTOGRAPHING CELLS OF CCD FRAME 1

PHOTOGRAPHING CELLS OF CCD FRAME 2

F I G. 8

Block diagram showing: 1 (object) → 9 MECHANICAL SHUTTER → 2 IMAGE-SHIFTING MEANS → 3 COLOR-SEPARATING OPTICAL SYSTEM → 4d CCD, 4e CCD, 4f CCD → 5 A/D CONVERTER → 6 IMAGE MEMORY. 2 IMAGE-SHIFTING MEANS also connects to 10 LIGHT-QUANTITY SENSOR.

FIG.9 (a)                    FIG.9 (b)

EP 0 836 318 A2

# FIG.10

EP 0 836 318 A2

F I G. 1 1

| TARGET VALUE | | | |
|---|---|---|---|

31

32 COMPARATOR (+/−)

33 AMPLIFIER

| MOTOR | 26 |
|---|---|

| OPTICAL SENSOR | 24 |
|---|---|

FIG.12

F I G. 1 3

Block diagram: 1 → MECHANICAL SHUTTER (9') → IMAGE-SHIFTING MEANS (2) → COLOR-SEPARATING OPTICAL SYSTEM (3) → CCD (4d), CCD (4e), CCD (4f) → A/D CONVERTER (5) → IMAGE MEMORY (6). LIGHT-QUANTITY SENSOR (10) connected to MECHANICAL SHUTTER.

28

# FIG.14 (a)

SHUTTER OPEN

# FIG.14 (b)

SHUTTER CLOSE